# EUROPEAN PATENT SPECIFICATION

(11) **EP 4 000 975 B1**
(45) Date of publication and mention of the grant of the patent: **19.07.2023**
(21) Application number: 21207044.5
(22) Date of filing: 09.11.2021
(51) Int. Cl.: B60H 1/00

(54) **A DEVICE FOR HEATING AND/OR AIR CONDITIONING FOR A MOTOR VEHICLE**
EIN GERÄT ZUR HEIZUNG UND/ODER KLIMATISIERUNG EINES KRAFTFAHRZEUGS
DISPOSITIF DE CHAUFFAGE ET/OU DE CLIMATISATION POUR VÉHICULE À MOTEUR

(30) Priority: 12.11.2020 IT 202000027116
(43) Date of publication of application: 25.05.2022
(73) Proprietor: DENSO THERMAL SYSTEMS S.p.A., 10046 Poirino (Torino) (IT)
(72) Inventor: CARBONE, Andrea, I-10046 POIRINO (Torino) (IT); AGLIETTA, Riccardo, I-10046 POIRINO (Torino) (IT); CAVUOTI, Adriano, I-10046 POIRINO (Torino) (IT)
(74) Representative: Vanzini, Christian

(56) References cited:
- EP-A1- 1 925 474
- EP-A2- 1 826 039
- WO-A1-2018/020105

## Description

This invention relates to a heating and/or air conditioning device for a motor vehicle, comprising an air inlet for supplying air; an air transmission branch and an air heating branch, both supplied by the inlet duct and communicating with each other via a mixing zone; and mixing means configured to distribute an air flow between the air transfer branch and the air heating branch, wherein said mixing means are movable between two extreme positions comprising a closed position, wherein they prevent communication between the air inlet and the air heating branch and force the air flow to cross the air transmission branch, and an open position, wherein they prevent communication between the air inlet and the air transmission branch and force the air flow to cross the air heating branch.

EP1826039A2 shows a device for air heating and conditioning comprising a tilting flap.

Devices of this type are known, in which the mixing means comprise flaps of different types, which are generally adapted to oscillate between two extreme positions, that is, an "all-hot" position and an "all-cold" position, and to occupy a plurality of intermediate positions. The treated air flow is generated by a fan located upstream of the air inlet.

One object of this invention is to provide a heating and/or air conditioning device in which the movement areas of the flaps occupy as little space as possible to allow as much room as possible for the fluid veins (hot and cold) to meet for their proper mixing.

A further object of this invention is to make available a flap configuration that is capable of working effectively even in the case in which the fan is placed extremely close to the air inlet.

Said object is achieved according to the invention by a device according to claim 1, wherein said mixing means comprise a tilting flap arranged between the air inlet and the air transmission and air heating branches, said tilting flap comprising a first end hinged to a sliding transmission member configured to drive the tilting flap and a second end guided by a sliding guide configured to orient the tilting flap relative to the air flow, wherein in said closed position the tilting flap closes an inlet of the air heating branch and deflects the air flow into the air transmission branch, and in said open position the tilting flap closes an inlet of the air transmission branch and deflects the air flow through the air heating branch, wherein
in said closed position the first end of the tilting flap is in abutment against a first wall of the air inlet, and the second end of the tilting flap is in abutment against an inner partition separating the air heating branch from the air transmission branch, and
in said open position, the first end of the tilting flap is in abutment against a second wall of the air inlet, opposite said first wall, and the second end of the tilting flap is in abutment against said inner partition.

According to the invention, it is possible to perform a movement of the tilting flap that is similar to that of a conventional swiveling flap, in that the tilting flap rotates around its second end but is different from the swiveling flap in that said second end is movable in a guided manner. In this way it is possible to have a movement that starts from one end in a similar way to a swiveling flap, but then moves the tilting flap away from the air inlet and finally brings it close to this inlet when reaching the opposite end, again in a similar way to a swiveling flap. In the case in which there is a fan extremely close to the air inlet, the arrangement described above allows the tilting flap to be moved as far as possible from the fan to avoid turbulence, vibration, and acoustic disaster, which would not be ensured by a conventional swiveling flap in the intermediate positions.

In addition, the use of sliding flaps allows for the least amount of space to be taken up with the movement areas of the flap, to allow as much space as possible for the fluid veins (hot and cold) to meet for their proper mixing.

Preferred embodiments of the invention are defined in the dependent claims, which are to be understood as an integral part of this description.

Further features and advantages of the device according to the invention will become clearer from the following detailed description of an embodiment of the invention, made in reference to the accompanying drawings, provided purely for illustrative and non-limiting purposes, wherein:
- Fig. 1 is a schematic cross-sectional view of a heating and/or air conditioning device according to the invention, in the "all-cold" position, or closed position;
- Fig. 2 is a similar view to Fig. 1, at an intermediate mixing position;
- Fig. 3 is a similar view to the above, in the "all-hot" position, or open position; and
- Fig. 4 and 5 are perspective views of a mixing group of the device from Fig. 1-3.

The device depicted in the figures comprises a casing 10 delimiting an inlet duct adapted to be fed by an airflow (arrow F₁) driven by a centrifugal fan 13. The centrifugal fan 13 conventionally comprises an auger 13a and an impeller 13b housed in the auger 13a and driven by an electric motor (not shown). The fan 13 is in turn powered by an outer air flow drawn from outside the vehicle's passenger compartment, or by a recirculating air stream drawn from inside the passenger compartment.

An evaporator (not shown) may be transversely housed in the inlet duct 12 connected to a conventional air conditioning circuit so as to produce an outflow of air that may be conditioned if the evaporator is active.

Downstream, the inlet duct flows into a part of the air conditioning device dedicated to mixing hot and cold air veins. At the inlet of this mixing portion, the inlet duct therefore defines an air inlet 14 bounded by opposing walls 15 and 16 formed in the casing 10. As may be seen in the figures, the auger 13a of the fan 13 is directly connected to the air inlet 14.

The air inlet 14 defines a confluence zone that feeds an air transmission branch 26 on one side, and an air heating branch 28 on the other side. The air heating branch 28 is delimited externally by a curved wall 30 of the casing and internally by an inner partition 32. On the other hand, the transmission branch 26 is delimited internally by the inner partition 32, and externally by an outer wall 33. The branches 26 and 28 communicate with each other on the one hand at the level of the confluence zone formed by the air inlet 14, and on the other hand at the level of another confluence zone 34, arranged downstream, which in the following will be referred to as the mixing zone.

A heater 36 is housed in the heating branch 28.

The mixing zone 34 conventionally communicates with various air distribution ducts (not shown) that are used to distribute the treated air to various areas within the vehicle. For example, there may be air distribution ducts supplying vents used for windscreen defrosting/defogging of the motor vehicle, air distribution ducts supplying air vents in the lower part of the motor vehicle passenger compartment, air distribution ducts supplying air vents on the vehicle dashboard, and so on.

A mixing group comprising a tilting flap 40 and a sliding flap 50 is mounted in the casing 10 at the mixing portion of the air conditioning device.

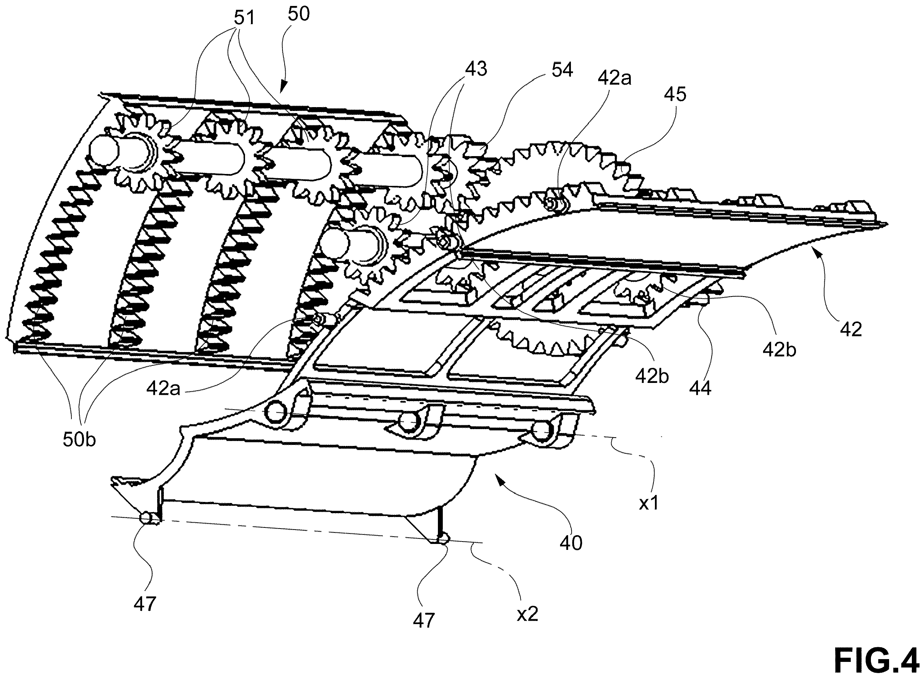

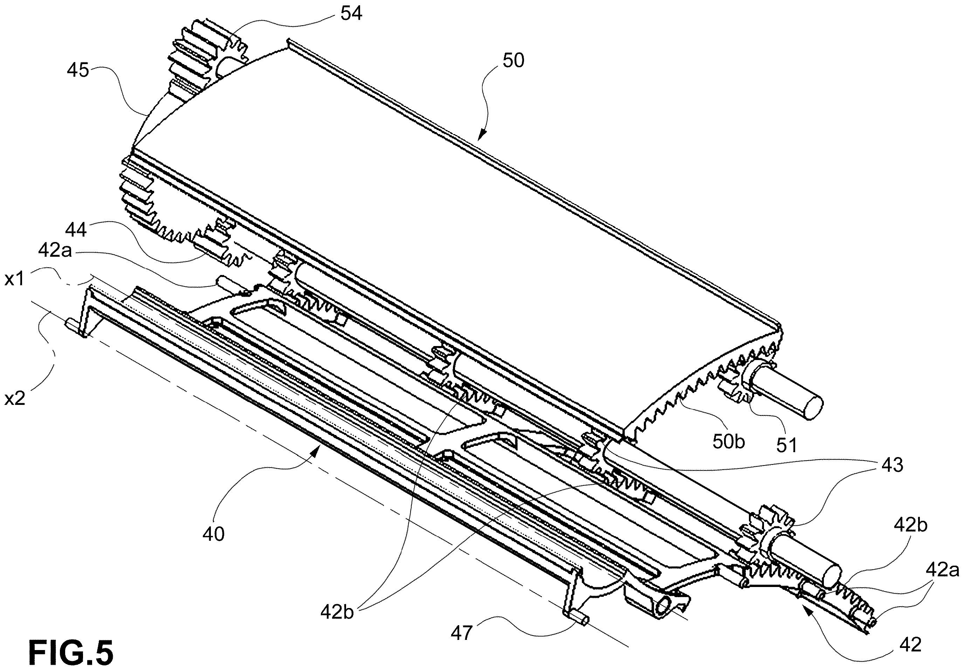

The tilting flap 40 is arranged between the air inlet 14 and the air transmission and air heating branches 26, 28. Referring also to Fig. 4 and 5, the tilting flap 40 comprises a first end 40a, at an axis x1, hinged to a sliding transmission element 42. Said transmission element 42 is constrained, via a plurality of guided pins 42a, to a sliding guide (not shown) formed in the casing 10 of the air conditioning device. A rack 42b, more precisely a plurality of racks, is formed on the transmission element 42. The transmission element 42 and the rack 42b extend in a curvilinear development, substantially conforming with the curvilinear development of the sliding guide.

The transmission element 42 is configured to drive the tilting flap 40. The transmission element 42 is in turn driven by a gear wheel 43 that engages the rack 42b; more specifically, the transmission element 42 is driven by a plurality of gear wheels 43 mounted on the same shaft, the gear wheels of which respectively engage the racks 42b. The gear wheel 42 is then coupled, via a driven wheel 44 mounted on the same shaft as the gear wheel 42, to a drive wheel 45, the shaft of which is connected to an actuator (not shown).

The tilting flap 40 comprises a second end 40b, opposite the first end 40a, which is guided by a sliding guide 46 configured to orient the tilting flap 40 with respect to the airflow. The sliding guide 46 extends, according to a curvilinear development, substantially in the direction of the air transmission branch 26 and is arranged in proximity to the inner partition 32. The second end 40b comprises a pin 47 engaging the slide rail 46; more specifically, the second end 40b comprises a pair of pins 47 engaging respective sliding guides 46 formed on opposite walls of the casing 10. The pin 47 defines a movable oscillation axis x2 of the tilting flap relative to the casing 10 of the air conditioning device.

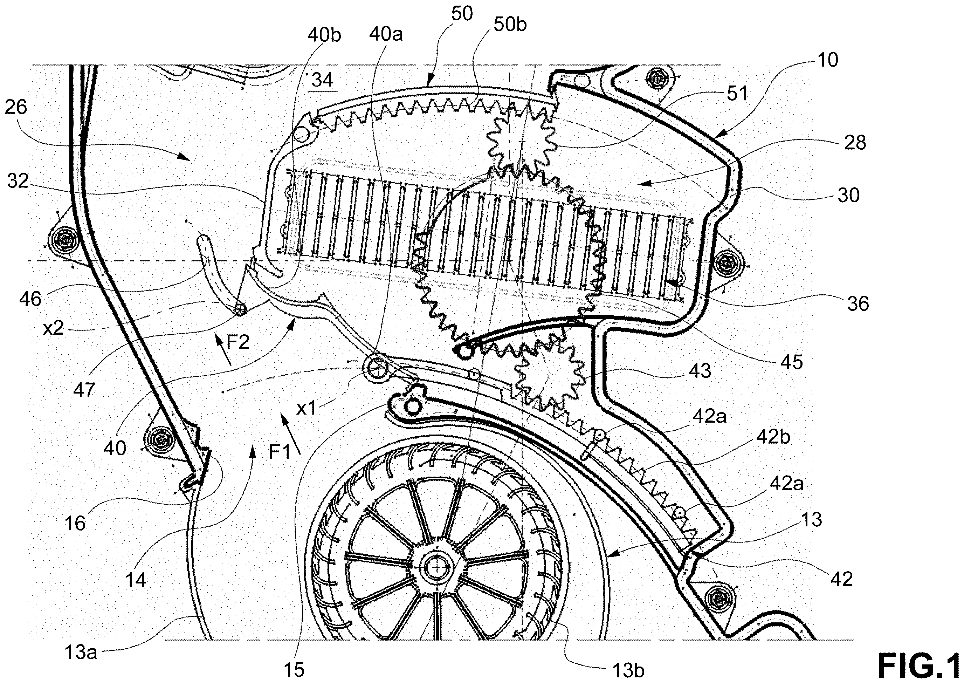

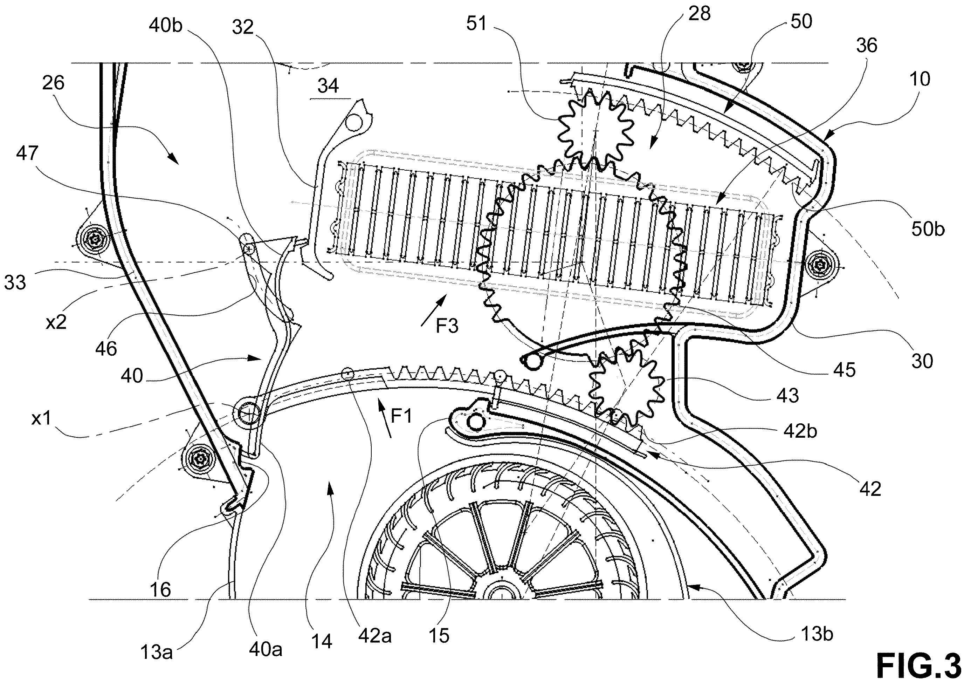

Due to the driving action exerted via the transmission element 42, the tilting flap 40 is adapted to oscillate between two extreme positions:
- a closed or "all-cold" position (shown in Fig. 1), in which the tilting flap 40 prevents communication between the air inlet 14 and the air heating branch 28 and forces the air flow to pass through the air transmission branch 26. In this position, the first end 40a of the tilting flap 40 is in abutment against one of the walls 15, 16 of the air inlet 14, hereinafter first wall 15, and the second end 40b of the tilting flap 40 is in abutment against the inner partition 32; the tilting flap 40 thus closes the inlet of the air heating branch 28 and deflects the airflow into the air transmission branch 26, as indicated by the arrow F2.
- an open or "all-hot" position (shown in Fig. 3), in which the tilting flap 40 prevents communication between the air inlet 14 and the air transmission branch 26 and forces the air flow to pass through the air heating branch 28. In said position, the first end 40a of the tilting flap 40 is in abutment against the other of the walls 15, 16 of the air inlet 14, hereinafter second wall 16, and the second end 40b of the tilting flap 40 is in abutment against the inner partition 32 (at a point generally different than the resting point for the "all-cold" position); the tilting flap 40 thus closes the inlet of the air transmission branch 26 and deflects the air flow into the air heating branch 28, as indicated by the arrow F3.

Note that in both positions the transmission element 42 does not disturb the airflow or does so only insignificantly. In the "all-cold" position, the transmission element 42 is in effect retracted within a seat formed between the air inlet 14 and the air heating branch 28, in proximity to the first wall 15 of the air inlet 14. In the "all-hot" position, the transmission element 42 protrudes beyond this seat for a portion thereof having large windows, as may be seen in Fig. 4 and 5.

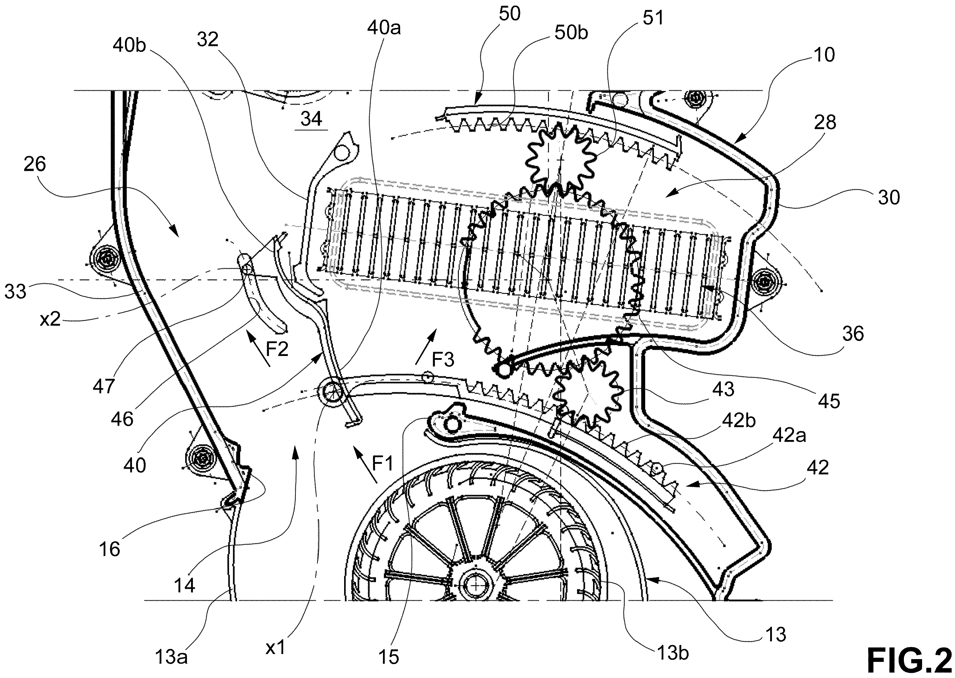

Fig. 2 shows an intermediate position of the tilting flap 40. As may be seen, the rotation induced by the drive element 42 in cooperation with the constraint provided by the sliding guide 46 also results in a displacement of the rotation axis x2 of the tilting flap 40; in the intermediate positions, therefore, the free end of the tilting flap 40 is moved away from the air inlet 14.

The sliding flap 50 is arranged between the air heating branch 28 and the mixing zone 34. The sliding flap 50 is constrained to a sliding guide (not shown) formed in the casing 10 of the air conditioning device. A rack 50b, more precisely a plurality of racks, is formed on the sliding flap 50. The sliding flap 50 and the rack 50b extend according to a curvilinear development, which is substantially in accordance with the curvilinear development of the sliding guide of the sliding flap 50.

The sliding flap 50 is driven by a gear wheel 51 that engages the rack 50b; more specifically, the sliding flap 50 is driven by a plurality of gear wheels 51 mounted on the same shaft, said gear wheels respectively engaging the racks 50b. The gear wheel 51 is then coupled, via a driven wheel 54 mounted on the same shaft as the gear wheel 51, to the drive wheel 45.

In this way, the sliding flap 50 is synchronously movable with the tilting flap 40. Thus, in the closed position (Fig. 1) the sliding flap 50 closes an outlet of the air heating branch 28, and in the open position (Fig. 3) the sliding door 50 opens the outlet of the air heating branch 28.

## Claims

1. A device for heating and/or air conditioning for a motor vehicle comprising an air inlet (14) for feeding air; an air transmission branch (26) and an air heating branch (28), both fed by the air inlet (14) and communicating with each other through a mixing zone (34); and mixing means configured to distribute an air flow between the air transmission branch (26) and the air heating branch (28), wherein said mixing means are movable between two extreme positions comprising a closed position, wherein the mixing means prevent a communication between the air inlet (14) and the air heating branch (28) and force the air flow to flow through the air transmission branch (26); and an open position, wherein the mixing means prevent communication between the air inlet (14) and the air transmission branch (26), and force the air flow to flow through the air heating branch (28);
wherein said mixing means comprise a tilting flap (40) arranged between the air inlet (14) and the air transmission and air heating branches (26, 28), said tilting flap comprising a first end (40a) hinged to a sliding transmission element (42) configured to drive the tilting flap (40), and a second end (40b) guided by a sliding guide (46) configured to orient the tilting flap (40) relative to the air flow, wherein in said closed position the tilting flap (40) closes an inlet of the air heating branch (28) and deflects the air flow into the air transmission branch (26), and in said open position the tilting flap (40) closes an inlet of the air transmission branch (26) and deflects the air flow into the air heating branch (28),
the device being **characterized in that**
in said closed position the first end (40a) of the tilting flap (40) is in abutment against a first wall (15) of the air inlet (14), and the second end (40b) of the tilting flap (40) is in abutment against an inner partition (32) separating the air heating branch (28) from the air transmission branch (26), and
in said open position the first end (40a) of the tilting flap (40) is in abutment against a second wall (16) of the air inlet (14), opposite to said first wall (15), and the second end (40b) of the tilting flap (40) is in abutment against said inner partition (32).

2. The device according to claim 1, wherein said sliding guide (46) is arranged close to the inner partition (32) and extends along the air transmission branch (26).

3. The device according to any of the preceding claims, wherein said transmission element (42) comprises a rack (42b) engaged by a gear wheel (43) configured to drive the transmission element (42).

4. The device according to any of the preceding claims, wherein the second end (40b) of the tilting flap (40) comprises a pin (47) engaging a stationary sliding guide (46).

5. The device according to any of the preceding claims, further comprising a sliding flap (50) arranged between the air heating branch (28) and the mixing zone (34), said sliding flap (50) being connected to the transmission element (42) through a transmission (43, 45, 51), wherein in said closed position the sliding flap (50) closes an outlet of the air heating branch (28), and in said open position the sliding flap (50) opens the outlet of the air heating branch (28).

6. The device according to claim 5, wherein said transmission comprises at least one gear.

## Patentansprüche

1. Heiz- und/oder Klimatisierungsvorrichtung für ein Kraftfahrzeug, aufweisend einen Lufteinlass (14) zur Luftzufuhr; einen Luftübermittlungsast (26) und einen Lufterwärmungsast (28), die beide von dem Lufteinlass (14) gespeist werden und durch eine Mischzone (34) miteinander in Verbindung stehen; und eine Mischeinrichtung, die dazu ausgelegt ist, einen Luftstrom zwischen dem Luftübermittlungsast (26) und dem Lufterwärmungsast (28) zu verteilen, wobei die Mischeinrichtung zwischen zwei Extremstellungen verstellbar ist, aufweisend eine geschlossene Stellung, in der die Mischeinrichtung eine Verbindung zwischen dem Lufteinlass (14) und dem Lufterwärmungsast (28) verhindert und den Luftstrom zum Durchströmen des Luftübermittlungsastes (26) zwingt; und eine offene Stellung, in der die Mischeinrichtung eine Verbindung zwischen dem Lufteinlass (14) und dem Luftübermittlungsast (26) verhindert und den Luftstrom zum Durchströmen des Lufterwärmungsastes (28) zwingt;
wobei die Mischeinrichtung eine zwischen dem Lufteinlass (14) und den Luftübermittlungs- und Lufterwärmungsästen (26, 28) angeordnete Kippklappe (40) aufweist, wobei die Kippklappe (40) ein erstes Ende (40a), das an ein zum Betätigen der Kippklappe (40) ausgelegtes verschiebbares Übertragungselement (42) angelenkt ist, und ein zweites Ende (40b), das von einer Schiebeführung (46) geführt wird, die zum Ausrichten der Kippklappe (40) relativ zum Luftstrom ausgelegt ist, aufweist, wobei die Kippklappe (40) in der geschlossenen Stellung einen Einlass des Lufterwärmungsastes (28) verschließt und den Luftstrom in den Luftübermittlungsast (26) umlenkt und die Kippklappe (40) in der offenen Stellung einen Einlass des Luftübermittlungsastes (26) verschließt und den Luftstrom in den Lufterwärmungsast (28) umlenkt,
wobei die Vorrichtung **dadurch gekennzeichnet ist, dass**
in der geschlossenen Stellung das erste Ende (40a) der Kippklappe (40) an einer ersten Wand (15) des Lufteinlasses (14) anliegt und das zweite Ende (40b) der Kippklappe (40) an einer inneren Trennwand (32) anliegt, die den Lufterwärmungsast (28) von dem Luftübermittlungsast (26) trennt, und
in der offenen Stellung das erste Ende (40a) der Kippklappe (40) an einer der ersten Wand (15) gegenüberliegenden zweiten Wand (16) des Lufteinlasses (14) anliegt und das zweite Ende (40b) der Kippklappe (40) an der inneren Trennwand (32) anliegt.

2. Vorrichtung nach Anspruch 1, wobei die Schiebeführung (46) in der Nähe der inneren Trennwand (32) angeordnet ist und sich entlang des Luftübermittlungsastes (26) erstreckt.

3. Vorrichtung nach einem der vorangehenden Ansprüche, wobei das Übermittlungselement (42) eine Zahnstange (42b) aufweist, die von einem zum Antreiben des Übermittlungselements (42) ausgelegten Zahnrad (43) in Eingriff genommen ist.

4. Vorrichtung nach einem der vorangehenden Ansprüche, wobei das zweite Ende (40b) der Kippklappe (40) einen Stift (47) aufweist, der in eine stationäre Schiebeführung (46) eingreift.

5. Vorrichtung nach einem der vorangehenden Ansprüche, weiter aufweisend eine zwischen dem Lufterwärmungsast (28) und der Mischzone (34) angeordnete Schiebeklappe (50), wobei die Schiebeklappe (50) durch ein Getriebe (43, 45, 51) mit dem Übermittlungselement (42) verbunden ist, wobei die Schiebeklappe (50) in der geschlossenen Stellung einen Auslass des Lufterwärmungsastes (28) verschließt und die Schiebeklappe (50) in der offenen Stellung den Auslass des Lufterwärmungsastes (28) öffnet.

6. Vorrichtung nach Anspruch 5, wobei das Getriebe mindestens ein Zahnrad aufweist.

## Revendications

1. Dispositif de chauffage et/ou de climatisation pour un véhicule à moteur comprenant une entrée d'air (14) pour une alimentation en air ; une branche de transmission d'air (26) et une branche de chauffage d'air (28), ces deux branches étant alimentées par l'entrée d'air (14) et communiquant l'une avec l'autre par l'intermédiaire d'une zone de mélange (34) ; et des moyens de mélange configurés pour distribuer un écoulement d'air entre la branche de transmission d'air (26) et la branche de chauffage d'air (28), lesdits moyens de mélange étant mobiles entre deux positions extrêmes comprenant une position fermée, à laquelle les moyens de mélange empêchent toute communication entre l'entrée d'air (14) et la branche de chauffage d'air (28) et forcent l'écoulement d'air à s'écouler à travers la branche de transmission d'air (26), et une position ouverte, à laquelle les moyens de mélange empêchent toute communication entre l'entrée d'air (14) et la branche de transmission d'air (26), et forcent l'écoulement d'air à s'écouler à travers la branche de chauffage d'air (28) ;
lesdits moyens de mélange comprenant un volet basculant (40) agencé entre l'entrée d'air (14) et les branches de transmission d'air et de chauffage d'air (26, 28), ledit volet basculant comprenant une première extrémité (40a) articulée à un élément de transmission coulissant (42) configuré pour entraîner le volet basculant (40), et une deuxième extrémité (40b) guidée par un guide coulissant (46) configuré pour orienter le volet basculant (40) par rapport à l'écoulement d'air, à ladite position fermée, le volet basculant (40) fermant une entrée de la branche de chauffage d'air (28) et déviant l'écoulement d'air dans la branche de transmission d'air (26), et, à ladite position ouverte, le volet basculant (40) fermant une entrée de la branche de transmission d'air (26) et déviant l'écoulement d'air dans la branche de chauffage d'air (28),
le dispositif étant **caractérisé en ce que**
à ladite position fermée, la première extrémité (40a) du volet basculant (40) est en butée contre une première paroi (15) de l'entrée d'air (14), et la deuxième extrémité (40b) du volet basculant (40) est en butée contre une cloison intérieure (32) séparant la branche de chauffage d'air (28) de la branche de transmission d'air (26), et
à ladite position ouverte, la première extrémité (40a) du volet basculant (40) est en butée contre une deuxième paroi (16) de l'entrée d'air (14), à l'opposé de ladite première paroi (15), et la deuxième extrémité (40b) du volet basculant (40) est en butée contre ladite cloison intérieure (32).

2. Dispositif selon la revendication 1, ledit guide coulissant (46) étant agencé à proximité de la cloison intérieure (32) et s'étendant le long de la branche de transmission d'air (26).

3. Dispositif selon l'une quelconque des revendications précédentes, ledit élément de transmission (42) comprenant une crémaillère (42b) engagée par une roue dentée (43) configurée pour entraîner l'élément de transmission (42).

4. Dispositif selon l'une quelconque des revendications précédentes, la deuxième extrémité (40b) du volet basculant (40) comprenant une broche (47) engageant un guide coulissant immobile (46).

5. Dispositif selon l'une quelconque des revendications précédentes, comprenant en outre un volet coulissant (50) agencé entre la branche de chauffage d'air (28) et la zone de mélange (34), ledit volet coulissant (50) étant relié à l'élément de transmission (42) par l'intermédiaire d'une transmission (43, 45, 51), à ladite position fermée, le volet coulissant (50) fermant une sortie de la branche de chauffage d'air (28), et, à ladite position ouverte, le volet coulissant (50) ouvrant la sortie de la branche de chauffage d'air (28).

6. Dispositif selon la revendication 5, ladite transmission comprenant au moins un engrenage.
